# FASCICULE DE BREVET EUROPEEN

(11) **EP 2 496 920 B1**
(45) Date de publication et mention de la délivrance du brevet: **10.07.2013**
(21) Numéro de dépôt: 10792956.4
(22) Date de dépôt: 02.11.2010
(51) Int. Cl.: G01L 3/10, G01L 5/22, B29C 45/14

(54) **COLLECTEUR DE FLUX MAGNÉTIQUE POUR DISUPOSITIF DE DÉTECTION DE COUPLE**
MAGNETFLUSSKOLLEKTOR FÜR EINEN DREHMOMENTDETEKTOR
MAGNETIC FLUX COLLECTOR FOR A TORQUE DETECTION DEVICE

(30) Priorité: 04.11.2009 FR 0957789
(43) Date de publication de la demande: 12.09.2012
(73) Titulaire: JTEKT Europe, 69540 Irigny (FR)
(72) Inventeur: COSCOY, Elsa, F-31700 Blagnac (FR); REY, Laurent, F-69100 Villeurbanne (FR)
(74) Mandataire: Chevalier, Renaud Philippe
(86) Numéro de dépôt international: PCT/FR2010/052343
(87) Numéro de publication internationale: WO 2011/055069

(56) Documents cités:
- EP-A1- 1 870 684
- FR-A1- 2 845 472
- JP-A- 2007 187 481

## Description

La présente invention concerne, d'une manière générale, le domaine technique des systèmes de direction des véhicules automobiles, et plus particulièrement les systèmes de direction qui comprennent un dispositif de détection de couple, servant à mesurer le couple exercé par le conducteur du véhicule sur le volant, en vue de l'assistance électrique ou hydraulique des mouvements du système de direction, autrement dit les mouvements d'orientation des roues directrices du véhicule concerné. Encore plus particulièrement, cette invention se rapporte à un procédé de fabrication d'un collecteur de flux magnétique pour un tel dispositif de détection de couple.

Dans un système de direction assistée, le couple ou l'effort d'assistance fourni pour soulager le conducteur du véhicule est asservi au couple exercé par le conducteur sur le volant de conduite, ce qui rend nécessaire la présence d'un capteur de couple au volant, à partir duquel est commandée l'intensité de l'action d'assistance. Parmi les capteurs de couple utilisables, les capteurs les plus courants utilisent la variation d'angle d'une barre de torsion. Une catégorie plus particulière de dispositifs de détection de couple, utilisés notamment dans les systèmes de direction assistée électrique, comprend des capteurs fonctionnant sur un principe magnétique, tels que les capteurs décrits dans les documents de brevets FR 2 837 282 A1, FR 2 872 902 A1, FR 2845472 A1, US 2005/0126309 A1 et US 6 988 422 B2.

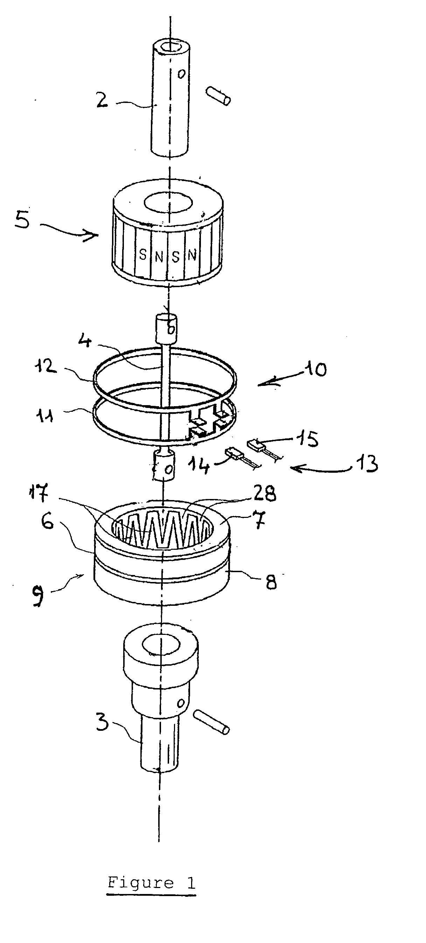

En se référant à la figure 1 du dessin schématique annexé, un capteur de couple de ce genre est intercalé entre un arbre rotatif d'entrée 2 et un arbre rotatif de sortie 3, reliés mécaniquement par une barre de torsion 4, et il se compose lui-même de quatre éléments principaux, qui sont :
- un ensemble d'aimants permanents 5 solidaire de l'extrémité de l'arbre d'entrée 2,
- une paire de culasses magnétiques 6 et 7 surmoulées par un matériau plastique 8 et formant un collecteur de flux magnétique 9, rendu solidaire de l'extrémité de l'arbre de sortie 3 par l'intermédiaire d'une bague de fixation (non représentée),
- un support concentrateur de flux 10, composé de deux bagues collectrices 11 et 12 surmoulées par un matériau plastique et entourées d'un bouclier électromagnétique (non représentés),
- un capteur de flux magnétique 13, composé de deux capteurs élémentaires à effet Hall 14 et 15 surmoulés par un matériau plastique et comprenant un bouclier électromagnétique (non représenté).

Le document de brevet EP 1 870 684 A1 décrit un processus d'obtention d'un collecteur de flux magnétique, composé d'une paire de culasses magnétiques et d'une bague de fixation surmoulées par un matériau plastique. JP 2007187481 décrit un procédé de fabrication similaire.

La principale exigence du processus d'obtention du collecteur de flux magnétique est de réaliser un positionnement angulaire précis des deux culasses magnétiques l'une par rapport à l'autre et aussi un positionnement angulaire précis de la paire de culasses magnétiques par rapport à la bague de fixation. Le document de brevet EP 1 870 684 A1 propose, à cet effet, d'utiliser deux aiguilles placées dans la cavité de moulage de l'outillage d'injection, pour localiser la paire de culassas magnétiques grâce à des trous de positionnement judicieusement situés sur les deux culasses. Les deux culasses sont placées l'une après l'autre dans la cavité de moulage de l'outillage d'injection, en étant positionnées angulairement par les deux aiguilles. La matière de surmoulage est ensuite injectée, pour réunir les deux culasses et obtenir ainsi le collecteur de flux.

Ce processus connu présente l'inconvénient d'être délicat à mettre en oeuvre et insuffisamment précis.

Pour ne pas perturber le flux magnétique, les trous de positionnement ménagés dans les culasses doivent être de dimension réduite, en particulier de très faible diamètre. Les deux aiguilles présentent donc elles aussi un très faible diamètre, comparativement à leur longueur, par exemple un diamètre de l'ordre d'un millimètre pour une longueur de l'ordre de 15 millimètres. Par conséquent, les deux aiguilles sont d'une part fragiles, leur durée de vie en production industrielle étant limitée, ce qui nuit à l'efficience du procédé de fabrication et accroît son coût. D'autre part, ces deux aiguilles sont rendues flexibles, ce qui nuit à la précision du positionnement angulaire d'une culasse par rapport à l'autre.

La présente invention vise à remédier à ces inconvénients, et à cet effet, elle propose un procédé amélioré, permettant de réaliser un collecteur de flux magnétique avec un positionnement précis et robuste des deux culasses magnétiques l'une par rapport à l'autre.

Ce problème est résolu, pour un collecteur de flux magnétique du type ici concerné, c'est-à-dire comprenant une bague de fixation et deux culasses magnétiques coaxiales à dents respectives imbriquées et surmoulées par un matériau plastique, par un procédé de fabrication qui consiste :
- à prévoir un moule de surmoulage, comportant une cavité globalement cylindrique pourvue, sur sa surface latérale, d'au moins une nervure orientée axialement,
- à introduire coaxialement dans la cavité du moule de surmoulage deux culasses magnétiques présentant chacune, à leur périphérie, au moins deux encoches ouvertes radialement vers l'extérieur, au moins une encoche de chaque culasse étant engagée sur une nervure de ladite cavité de manière à positionner angulairement les deux culasses et
- à injecter dans ladite cavité le matériau plastique de surmoulage.

Les nervures de la cavité du moule de surmoulage procurent un positionnement angulaire très précis des deux culasses magnétiques, ces nervures n'étant pas fragiles et possédant une flexibilité nulle.

Avantageusement, la ou chaque nervure de la cavité du moule de surmoulage possède, du côté ouvert de cette cavité, une extrémité biseautée, ceci afin de faciliter la mise en place des culasses magnétiques dans ladite cavité.

L'invention a aussi pour objet un collecteur de flux magnétique fabriqué par le procédé qui vient d'être indiqué, le collecteur comprenant une bague de fixation et deux culasses magnétiques coaxiales à dents respectives imbriquées surmoulées par un matériau plastique, ce collecteur étant caractérisé par le fait que les deux culasses magnétiques présentent chacune, à leur périphérie, au moins deux encoches ouvertes radialement vers l'extérieur avec au moins une encoche sensiblement alignée sur le sommet d'une dent de la culasse et au moins une autre encoche sensiblement alignée sur le point milieu entre deux dents consécutives de la culasse.

Chaque culasse magnétique présente avantageusement au total quatre encoches, avec deux premières encoches diamétralement opposées, alignées respectivement sur les sommets de deux dents elles aussi diamétralement opposées de la culasse, et avec deux autres encoches diamétralement opposées, alignées chacune sur les points milieux entre deux dents consécutives de la culasse.

Le décalage angulaire entre les deux paires d'encoches est ainsi égal à un multiple impair du décalage angulaire entre un sommet et un creux immédiatement consécutif entre dents de chaque culasse. En conséquence, les deux culasses peuvent être positionnées tête bêche avec un décalage angulaire permettant d'imbriquer leurs dents respectives les unes dans les autres. On notera que, si chaque culasse comporte deux paires d'encoches diamétralement opposées, il suffit de prévoir dans le moule au total deux nervures, lesquelles coopèrent avec une paire d'encoches de l'une des culasses, et avec une paire d'encoches de l'autre culasse.

La largeur et la profondeur des encoches doivent être aussi fines que possible, afin de limiter la perturbation que ces encoches créent dans les flux magnétiques qui, en cours de fonctionnement du collecteur de flux, passent par les culasses. A titre d'exemple, pour des culasses magnétiques ayant un diamètre extérieur de 40 millimètres, des encoches de forme générale trapézoïdale ayant une largeur de 1,5 millimètre et une profondeur de 1,5 millimètre permettent d'obtenir une variation du flux magnétique collecté qui reste inférieure à 5 %, ce qui doit être considéré comme satisfaisant.

En variante, on pourrait aussi envisager des encoches de forme rectangulaire, triangulaire ou semi-circulaire. Dans tous les cas, les nervures formées dans la cavité du moule doivent présenter une section en correspondance avec la forme des encoches, mais diminuée d'un jeu judicieusement choisi pour permettre une mise en place aisée des culasses dans le moule, tout en conservant une grande précision de positionnement angulaire d'une culasse par rapport à l'autre, cette précision peuvent être de l'ordre de ± 0,5 °.

L'invention sera mieux comprise à l'aide de la description qui suit, en référence au dessin schématique annexé représentant, à titre d'exemple, une forme d'exécution de ce collecteur de flux magnétique et illustrant son procédé de fabrication.
Figure 1 (déjà mentionnée) est une vue en perspective éclatée d'un dispositif de détection de couple, auquel est applicable la présente invention,
Figure 2 est une vue en perspective d'une culasse magnétique appartenant à un collecteur de flux réalisé conformément à la présente invention,
Figures 3, 4 et 5 sont des schémas qui illustrent des étapes successives du procédé de fabrication de ce collecteur de flux.

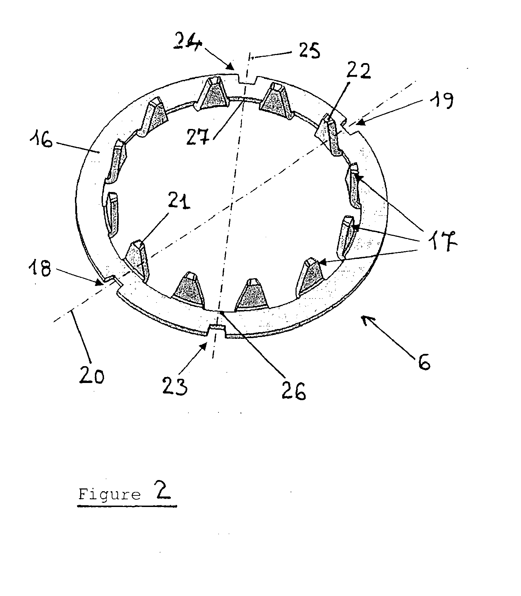

Sur la figure 2, est représentée une culasse magnétique 6 d'un collecteur de flux qui est la culasse inférieure. La culasse magnétique 6, de forme générale annulaire, possède une collerette périphérique 16 sur le bord intérieur de laquelle sont formées des dents 17 en nombre pair, régulièrement espacées, qui sont pliées vers le haut (par référence à la figure).

Sur le bord extérieur de la collerette périphérique 16 sont ménagées deux premières encoches 18 et 19 de forme trapézoïdale, centrées sur une même ligne diamétrale 20 qui est elle-même alignée sur les sommets 21 et 22 de deux dents 17 diamétralement opposées.

Sur le bord extérieur de la collerette périphérique 16 sont ménagées deux autres encoches 23 et 24, de forme trapézoïdale, centrées sur une autre ligne diamétrale 25 qui est elle-même alignée sur les points milieux 26 et 27 entre deux dents 17 consécutives.

L'autre culasse magnétique 7, qui est la culasse supérieure, possède une configuration similaire, ses dents 28 étant toutefois pliées vers le bas (par référence au dessin) pour s'imbriquer entre les dents 17 de la première culasse magnétique 6.

Le collecteur de flux 9 comprend encore une bague de fixation (non visible au dessin), et un surmoulage en matériau plastique 8 qui lie la bague de fixation 29 et les deux culasses magnétiques 6 et 7 (voir figure 1).

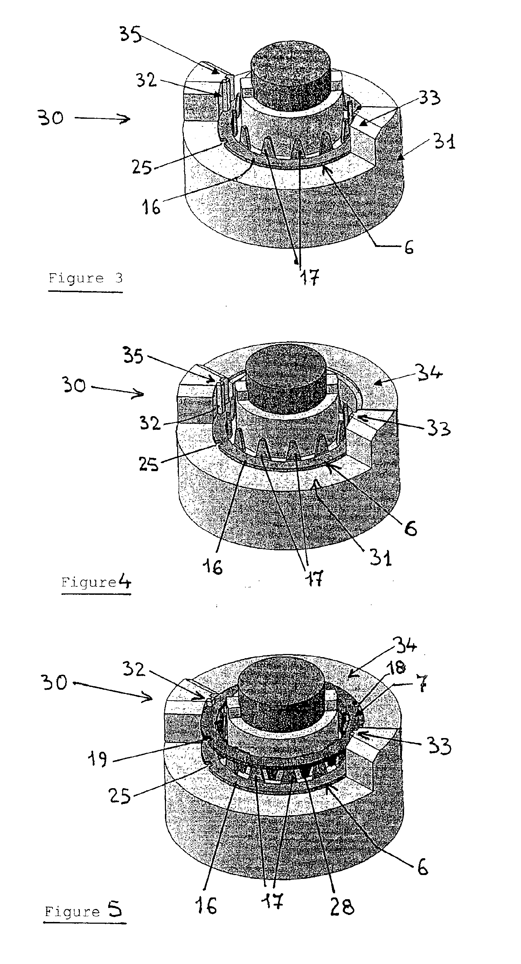

En se référant aux figures 3 à 5, on décrira maintenant les moyens et le processus de mise en place des deux culasses magnétiques 6 et 7 et de surmoulage de ces culasses 6 et 7 par le matériau plastique 8.

La figure 3 montre une partie d'un moule d'injection 30 utilisé pour surmouler les culasses, cette partie délimitant une cavité 31 de forme générale cylindrique. Sur la paroi latérale de la cavité 31 sont formées deux nervures 32 et 33 orientées axialement, diamétralement opposées et de section horizontale correspondant à la forme des encoches des culasses magnétiques. Les nervures 32 et 33 sont formées dans des zones fixes de la cavité 31, zones qui sont situées entre deux coulisses latérales 34 opposées, dont une seule est visible aux figures 4 et 5. Les extrémités supérieures 35 des deux nervures 32 et 33 sont biseautées.

La figure 3 illustre aussi la mise en place de la culasse magnétique 6 inférieure dans la cavité 31. La culasse 6 est introduite de telle sorte que ses deux premières encoches 18 et 19 s'engagent respectivement sur les deux nervures 32 et 33, les extrémités supérieures biseautées 35 des nervures facilitant l'insertion de la culasse 6 dans la cavité 31.

Ensuite, comme le montre la figure 4, il est procédé à la fermeture des coulisses latérales 34. Ces coulisses permettent d'obtenir un écartement axial précis entre les deux culasses 6 et 7.

La figure 5 illustre la mise en place de la culasse magnétique 7 supérieure dans la cavité 31 du moule d'injection 30. Les mêmes nervures 32 et 33 s'engagent alors dans les autres encoches 23 et 24 de cette culasse 7, disposée en position retournée et décalée angulairement par rapport à la culasse 6 inférieure.

Les deux culasses 6 et 7 sont ainsi positionnées angulairement avec précision l'une par rapport à l'autre, grâce aux deux nervures 32 et 33 qui coopèrent avec deux des quatre encoches de chaque culasse 6 ou 7. Il est alors procédé à l'opération d'injection du matériau plastique 8, qui enrobera les deux culasses 6 et 7 et les liera définitivement.

On ne s'éloignerait pas du cadre de l'invention, telle que définie dans les revendications annexées :
- en modifiant le nombre des encoches pratiquées dans les deux culasses magnétiques,
- en modifiant la forme de ces encoches, qui pourraient aussi être rectangulaires, triangulaires ou semi-circulaires,
- en modifiant les détails du moule de surmoulage utilisé pour la fabrication du collecteur de flux magnétique,
- en destinant ce collecteur de flux magnétique à la constitution de dispositifs de détection de couple utilisables dans des directions assistées de tout type.

## Revendications

1. Procédé de fabrication d'un collecteur de flux magnétique pour dispositif de détection de couple, le collecteur de flux magnétique (9) comprenant une bague de fixation et deux culasses magnétiques (6, 7) coaxiales à dents respectives (17, 28) imbriquées et surmoulées par un matériau plastique (8), **caractérisé en ce qu'**il consiste :
- à prévoir un moule (30) de surmoulage, comportant une cavité (31) globalement cylindrique pourvue, sur sa surface latérale, d'au moins une nervure (32, 33) orientée axialement,
- à introduire coaxialement, dans la cavité (31) du moule (30) de surmoulage, deux culasses magnétiques (6, 7) présentant chacune, à leur périphérie, au moins deux encoches (18, 19, 23, 24) ouvertes radialement vers l'extérieur, au moins une encoche (18, 19, 23, 24) de chaque culasse étant engagée sur une nervure (32, 33) de ladite cavité (31) de manière à positionner angulairement les deux culasses (6, 7), et
- à injecter dans ladite cavité (31) le matériau plastique (8) de surmoulage.

2. Procédé selon la revendication 1, **caractérisé en ce que** la ou chaque nervure (32, 33) de la cavité (31) du moule (30) de surmoulage possède, du côté ouvert de cette cavité, une extrémité biseautée (35).

3. Collecteur de flux magnétique pour dispositif de détection de couple, fabriqué par le procédé selon la revendication 1 ou 2, le collecteur de flux magnétique (9) comprenant une bague de fixation et deux culasses magnétiques (6, 7) coaxiales à dents respectives imbriquées (17, 18) surmoulées par un matériau plastique (8), **caractérisé en ce que** les deux culasses magnétiques (6, 7) présentent chacune, à leur périphérie, au moins deux encoches (18, 19, 23, 24) ouvertes radialement vers l'extérieur, avec au moins une encoche (18, 19) sensiblement alignée avec le sommet d'une dent (17, 28) de la culasse (6, 7) et avec au moins une autre encoche (23, 24) sensiblement alignée sur le point milieu (26, 27) entre deux dents (17, 28) consécutives de la culasse (6, 7).

4. Collecteur de flux magnétique selon la revendication 3 , **caractérisé en ce que** chaque culasse magnétique (6, 7) présente au total quatre encoches (18, 19, 21, 22), avec deux premières encoches (18, 19) diamétralement opposées, alignées respectivement sur les sommets (21, 22) de deux dents (17, 28) elles aussi diamétralement opposées de la culasse, et avec deux autres encoches (23, 24) diamétralement opposées, alignées chacune sur les points milieux (26, 27) entre deux dents (17, 28) consécutives de la culasse.

5. Collecteur de flux magnétique selon la revendication 3 ou 4, **caractérisé en ce que** les encoches (18, 19, 23, 24) des culasses (6,7) ont une forme générale trapézoïdale.

## Patentansprüche

1. Herstellungsverfahren eines Magnetflusskollektors für einen Drehmomentdetektor, wobei der Magnetflusskollektor (9) einen Befestigungsring und zwei koaxiale Magnetjoche (6, 7) mit jeweils verzahnten und durch einen Kunststoff (8) überformte Zähne (17, 28) umfasst, **dadurch gekennzeichnet, dass** es darin besteht:
- Bereitstellen einer Overmoulding-Form (30), die eine allgemein zylindrische Aufnahme (31) aufweist, die auf ihrer Seitenfläche mit mindestens einer axial ausgerichteten Rippe (32, 33) ausgestattet ist,
- koaxiales Einsetzen in die Aufnahme (31) der Overmoulding-Form (30) von zwei Magnetjochen (6, 7), die jeweils auf ihrem Umfang mindestens zwei radial nach außen offene Kerben (18, 19, 23, 24) aufweisen, wobei mindestens eine Kerbe (18, 19, 23, 24) jedes Jochs derart auf einer Rippe (32, 33) der Aufnahme (31) sitzt, dass die zwei Joche (6, 7) winklig positioniert sind, und
- Spritzen des Overmoulding-Kunststoffs (8) in die Aufnahme (31).

2. Verfahren nach Anspruch 1, **dadurch gekennzeichnet, dass** die oder jede Rippe (32, 33) der Aufnahme (31) der Overmoulding-Form (30) zur offenen Seite dieser Aufnahme ein abgeschrägtes Ende (35) besitzt.

3. Magnetflusskollektor für Drehmomentdetektor, der nach dem Verfahrens nach Anspruch 1 oder 2 hergestellt ist, wobei der Magnetflusskollektor (9) einen Befestigungsring und zwei koaxiale Magnetjoche (6, 7) mit jeweils verzahnten und durch einen Kunststoff (8) überformte Zähne (17, 28) umfasst, **dadurch gekennzeichnet, dass** die zwei Magnetjoche (6, 7) jeweils auf ihrem Umfang mindestens zwei radial nach außen offene Kerben (18, 19, 23, 24) mit mindestens einer in etwa mit der Spitze eines Zahns (17, 28) des Jochs (6, 7) ausgerichteten Kerbe (18, 19) und mit mindestens einer anderen Kerbe (23, 24), die etwa auf den Mittelpunkt (26, 27) zwischen zwei aufeinanderfolgenden Zähnen (17, 28) des Jochs (6, 7) ausgerichtet ist, aufweisen.

4. Magnetflusskollektor nach Anspruch 3, **dadurch gekennzeichnet, dass** jedes Magnetjoch (6, 7) insgesamt vier Kerben (18, 19, 21, 22) mit zwei ersten diametral gegenüberstehenden Kerben (18, 19), die jeweils auf die Spitzen (21, 22) von zwei Zähnen (17, 28) ausgerichtet sind, die dem Joch ebenfalls diametral gegenüberstehen, und mit zwei anderen diametral gegenüberstehenden Kerben (23, 24), die jeweils auf die Mittelpunkte (26, 27) zwischen zwei aufeinanderfolgenden Zähnen (17, 28) des Jochs ausgerichtet sind, aufweist.

5. Magnetflusskollektor nach Anspruch 3 oder 4, **dadurch gekennzeichnet, dass** die Kerben (18, 19, 23, 24) der Joche (6,7) eine generelle Trapezform haben.

## Claims

1. A method for manufacturing a magnetic flow collector for a torque detection device, the magnetic flow collector (9) comprising a fastening ring and two magnetic cylinder heads (6, 7) that are coaxial with interlocking respective teeth (17, 28) and overmolded by a plastic material (8), **characterized in that** it consists of:
- providing an overmolding mold (30), including a globally cylindrical cavity (31) provided, on the side surface thereof, with at least one rib (32, 33) oriented axially,
- inserting coaxially, into the cavity (31) of the overmolding mold (30), two magnetic cylinder heads (6, 7) each having, on the periphery thereof, at least two notches (18, 19, 23, 24) radially open toward the outside, at least one notch (18, 19, 23, 24) of each cylinder had being engaged on a rib (32, 33) of said cavity (31) so as to position the two cylinder heads (6, 7) angularly, and
- injecting the plastic overmolding material (8) into said cavity (31).

2. The method according to claim 1, **characterized in that** the or each rib (32, 33) of the cavity (31) of the overmolding mold (30) has, on the open side of that cavity, a beveled end (35).

3. A magnetic flow collector for a torque detection device, manufactured using the method according to claim 1 or 2, the magnetic flow collector (9) comprising a fastening ring and two magnetic cylinder heads (6, 7) that are coaxial with interlocking respective teeth (17, 18) overmolded by a plastic material (8), **characterized in that** the two magnetic cylinder heads (6, 7) each have, on the periphery thereof, at least two notches (18, 19, 23, 24) that are radially open toward the outside, with at least one notch (18, 19) substantially aligned with the apex of a tooth (17, 28) of the cylinder head (6, 7) and with at least one other notch (23, 24) substantially aligned on the midpoint (26, 27) between two consecutive teeth (17, 28) of the cylinder head (6, 7).

4. The magnetic flow collector according to claim 3, **characterized in that** each magnetic cylinder head (6, 7) has four notches (18, 19, 21, 22) in all, with two diametrically opposite first notches (18, 19) respectively aligned on the apices (21, 22) of two teeth (17, 28) that are also diametrically opposite the cylinder head, and with two other diametrically opposite teeth (23, 24) each aligned on the midpoints (26, 27) between two consecutive teeth (17, 28) of the cylinder head.

5. The magnetic flow collector according to claim 3 or 4, **characterized in that** the notches (18, 19, 23, 24) of the cylinder heads (6, 7) have a generally trapezoidal shape.
